# EUROPÄISCHE PATENTSCHRIFT

(11) **EP 1 666 944 B1**
(45) Veröffentlichungstag und Bekanntmachung des Hinweises auf die Patenterteilung: **10.10.2007**
(21) Anmeldenummer: 04028837.5
(22) Anmeldetag: 06.12.2004
(51) Int. Cl.: G02B 6/42

(54) **Optischer Faserkoppler**
Optical fiber coupler
Coupleur à fibre optique

(43) Veröffentlichungstag der Anmeldung: 07.06.2006
(73) Patentinhaber: TOPTICA Photonics AG, 82166 Gräfelfing (DE)
(72) Erfinder: Heidemann, Rainer, 81377 München (DE)
(74) Vertreter: Isfort, Olaf

(56) Entgegenhaltungen:
- EP-A- 0 216 307
- DE-A- 3 732 566
- US-A- 4 585 193
- US-A- 4 635 887
- US-A- 4 773 727
- US-A- 5 282 393
- MELLES GRIOT APPLICATION NOTES, [Online] August 2002 (2002-08), XP002313618 Gefunden im Internet: URL:http://alignment.mellesgriot.com/nano/ nano_app_notes/sm_fiber_launch.asp> [gefunden am 2005-01-11]

## Beschreibung

Die Erfindung betrifft einen Faserkoppler zur Einkopplung von Licht in eine optische Faser und/oder zur Auskopplung von Licht aus der Faser, mit zwei Halteelementen, nämlich einem Faserhalter zur Halterung der Faser, und einem Linsenhalter zur Halterung einer Fokussierungslinse, wobei die Halteelemente in axialer bzw. transversaler Richtung verstellbar sind.

Derartige Faserkoppler werden unter anderem im Bereich der Forschung für optische Experimente, und auf dem Gebiet der Telekommunikationstechnik für Systeme zur optischen Signalübertragung benötigt.

An Faserkoppler zur Einkopplung eines freien Lichtstrahls in eine optische Faser und zur Auskopplung von Licht aus der Faser sind hohe Anforderungen hinsichtlich der Präzision der Positionierung des Faserendes relativ zur Fokussierungslinse zu stellen. Übliche so genannte Single-Mode-Fasern haben einen Modenfelddurchmesser von nur einigen Mikrometern. Bei Single-Mode-Fasern für eine Lichtwellenlänge von 780 nm beispielsweise beträgt der Modenfelddurchmesser nur 4 µm. Zur Einkopplung eines freien Lichtstrahls in eine solche Faser muss daher die Fokussierungslinse entlang der optischen Achse auf wenige Mikrometer genau positionierbar sein. Nur so kann eine optimale Effizienz bei der Einkopplung erreicht werden. Eine Toleranz von 10µm verringert die Effizienz der Einkopplung bereits um 10 %. Noch empfindlicher hängt die Effizienz der Einkopplung von der transversalen Positionierung relativ zu dem Faserende ab. Bei nur einem Mikrometer Abweichung in transversaler Richtung von der optimalen Position ist die Effizienz der Einkopplung bereits um 20 % vermindert.

Ein Faserkoppler der eingangs genannten Art ist beispielsweise aus der US 5,282,393 A vorbekannt. Bei dem vorbekannten Koppler sind zur Verstellung der Halteelemente für die Faser bzw. die Linse transversale bzw. axiale Stellorgane vorgesehen. Diese bestehen im Wesentlichen aus Gewindestangen, die in entsprechenden Gewindebohrungen eines Grundelementes geführt sind. Das zur axialen Verstellung der Fokussierungslinse entlang der optischen Achse vorgesehene Stellorgan besteht bei dem vorbekannten Faserkoppler aus drei Gewindestangen mit daran geführten Schrauben. Diese Schrauben werden mittels einer Getriebeanordnung synchron gedreht, um so eine lineare Bewegung der Fokussierungslinse entlang der optischen Achse zu ermöglichen.

Nachteilig ist bei dem vorbekannten Faserkoppler, dass dieser aus einer Vielzahl von mit höchster Präzision zu fertigenden mechanischen Komponenten für die verschiedenen Stellorgane besteht. Aus diesem Grund ist der vorbekannten Faserkoppler extrem teuer in der Herstellung. Nachteilig ist ferner, dass die zuvor beschriebene Getriebeanordnung für die axiale Verstellung der Fokussierungslinse kaum mit ausreichender Präzision herstellbar ist, um die oben erwähnten Anforderungen an Faserkoppler für Single-Mode-Fasern zu genügen. Ein weiterer Nachteil ergibt sich aus der aufwendigen mechanischen Konstruktion des vorbekannten Faserkopplers. Dessen Aufbau ist nämlich nachteiligerweise nicht sehr kompakt. Nachteilig sind schließlich auch die unzureichende Genauigkeit bei der Verstellung der Linse bzw. des Faserendes in transversaler Richtung sowie die schlechte Langzeitstabilität der Justierung.

Die Dokumente US 4,585,193 und Melles Griot Application notes "Single Mode Fiber Launch" offenbaren Faserkoppler, bei denen eine Linse bzw. eine Faser mit Hilfe von Festkörpergelenken justiert wird.

Davon ausgehend ist es Aufgabe der Erfindung, einen verbesserten Faserkoppler bereitzustellen, der eine Verstellung der Fokussierungslinse bzw. der Faser in axialer bzw. transversaler Richtung mit ausreichender Präzision und Langzeitstabilität ermöglicht. Zudem soll der Koppler kompakt aufgebaut und zu geringen Kosten herstellbar sein.

Diese Aufgabe löst die Erfindung ausgehend von einem Faserkoppler der eingangs genannten Art dadurch, dass die Halteelemente jeweils über wenigstens ein elastisches Festkörpergelenk mit einem Grundkörper verbunden sind.

Die Verstellbarkeit der Faser bzw. der Fokussierungslinse basiert bei dem erfindungsgemäßen Faserkoppler auf dem Einsatz von elastischen Festkörpergelenken. Aufgrund der elastischen Eigenschaften der Festkörpergelenke kann der für den Faserkoppler benötigte Stellmechanismus besonders einfach realisiert werden. Zur Verstellung muss nämlich lediglich in einer Richtung eine Kraft gegen die elastische Rückstellkraft des Gelenkes ausgeübt werden. Die Rückstellkraft sorgt dann automatisch für die Langzeitstabilität der Justierung. Vorteilhafterweise können bei dem erfindungsgemäßen Faserkoppler die Halteelemente und die zugehörigen Grundkörper miteinander einstückig (monolithisch) hergestellt werden. Hierzu können bekannte Elektroerosionsverfahren, wie beispielsweise die Drahterosion, eingesetzt werden. Der erfindungsgemäße Faserkoppler zeichnet sich daher durch seine kostengünstige Herstellbarkeit bei gleichzeitig hoher Kompaktheit aus.

Zur Verstellung der Fokussierungslinse bzw. der Faser im Wesentlichen parallel zur optischen Achse ist eines der Halteelemente über insgesamt vier Festkörpergelenke und zwei Hebelarme mit dem Grundkörper verbunden, wobei die beiden Hebelarme nach Art eines Parallelogramms angeordnet sind. Durch die Anordnung in Form eines Parallelogramms wird eine im Wesentlichen lineare Bewegung realisiert. Eine Verkippung oder Verdrehung der Fokussierungslinse bzw. der Faser wird vermieden. Es tritt lediglich eine äußerst geringfügige parasitäre Bogenbewegung des Halteelementes auf, die jedoch keine spürbaren Auswirkungen hat, wenn der Hub der linearen Bewegung insgesamt begrenzt ist.

Zweckmäßigerweise hat bei dem erfindungsgemäßen Faserkoppler das Festkörpergelenk eines Halteelementes quer zur optischen Achse eine höhere Biegesteifigkeit als parallel dazu, während das Festkörpergelenk des anderen Halteelementes parallel zur optischen Achse eine höhere Biegesteifigkeit hat als senkrecht dazu. Dadurch wird erreicht, dass die Haltelemente zur Verstellung in axialer bzw. transversaler Richtung voneinander entkoppelt sind. Die Führung der zur Verstellung erforderlichen Bewegung der einzelnen Haltelemente wird dabei durch die spezielle Ausbildung der Festkörpergelenke erreicht, die jeweils senkrecht zur gewünschten Bewegungsrichtung eine wesentlich höhere Biegesteifigkeit haben als parallel dazu.

Zur Verstellung in transversaler Richtung kann eines der Halteelemente über wenigstens zwei Festkörpergelenke mit dem Grundkörper verbunden sein, und zwar derart, dass das Halteelement in zwei Richtungen senkrecht zur optischen Achse verstellbar ist. Die Anordnung der Festkörpergelenke kann dabei so gewählt werden, dass das Halteelement in zwei orthogonalen Richtungen senkrecht zur optischen Achse unabhängig verstellbar ist. Es zeigt sich, dass zur transversalen Verstellung Plattengelenke als Festkörpergelenke besonders geeignet sind. Eine Anordnung aus insgesamt drei Plattengelenken hat sich als praktikabel erwiesen. Dabei sind zwei der Plattengelenke in orthogonalen Richtungen senkrecht zur optischen Achse elastisch dehnbar, und zwar unter elastischer Auslenkung des in Bezug auf die beiden ersten Plattengelenke mittig angeordneten dritten Plattengelenks.

Besonders einfach lässt sich bei dem erfindungsgemäßen Faserkoppler eine Justiermöglichkeit in axialer bzw. transversaler Richtung dadurch realisieren, dass an wenigstens einem der Halteelemente eine Verstellschraube zur Festlegung der Position des Halteelementes relativ zu dem Grundkörper angreift. Durch diese Verstellschraube wirkt auf das entsprechende Haltelement eine Kraft entgegen der elastischen Rückstellkraft des Festkörpergelenks ein. Für jede Verstellrichtung reicht daher zur Justierung eine Verstellschraube aus, da durch diese zusammenwirkend mit den elastischen Eigenschaften des Festkörpergelenkes die Position des Halteelementes vorgegeben und gleichzeitig fixiert wird.

Bei dem erfindungsgemäßen Faserkoppler kommen, wie bereits ausgeführt, separate Halteelemente zum Einsatz, die unabhängig voneinander entweder in axialer oder in transversaler Richtung verstellbar sind. Eines der Halteelemente bildet den Faserhalter des erfindungsgemäßen Faserkopplers, der zur Halterung der Faser dient. Das andere Halteelement bildet den Linsenhalter zur Halterung der Fokussierungslinse. Als besonders zweckmäßig hat es sich herausgestellt, wenn bei dem erfindungsgemäßen Faserkoppler der Grundkörper des Faserhalters unter verschiedenen diskreten Winkelpositionen in Bezug auf die optische Achse an dem Grundkörper des Linsenhalters festlegbar ist. Dies ist wichtig, damit bei der Verwendung von polarisationserhaltenden optischen Fasern die Faser entsprechend der Polarisationsrichtung angeordnet werden kann. In der Praxis reichen dabei diskrete Winkelschritte von 45° mit einer Feineinstellungsmöglichkeit im Bereich von +/- 4° aus.

Zum Zwecke der thermischen Isolierung ist bei dem erfindungsgemäßen Faserkoppler sinnvollerweise ein Gehäuse vorgesehen, dass die Halteelemente und die zugehörigen Grundkörper allseitig umschließt.

Ein Ausführungsbeispiel der Erfindung wird im Folgenden unter Bezugnahme auf die Zeichnungen näher erläutert. Es zeigen:
- Fig. 1: Linsenhalter des erfindungsgemäßen Faserkopplers in geschnittener Seitenansicht;
- Fig. 2: Linsenhalter gemäß Fig. 1 in dreidimensionaler Ansicht;
- Fig. 3: Faserhalter des erfindungsgemäßen Faserkopplers in geschnittener Draufsicht;
- Fig. 4: Faserhalter in dreidimensionaler Ansicht;
- Fig. 5: Faserkoppler mit Linsenhalter und Faserhalter in dreidimensionaler Ansicht;
- Fig. 6: Explosionsdarstellung des erfindungsgemäßen Faserkopplers.

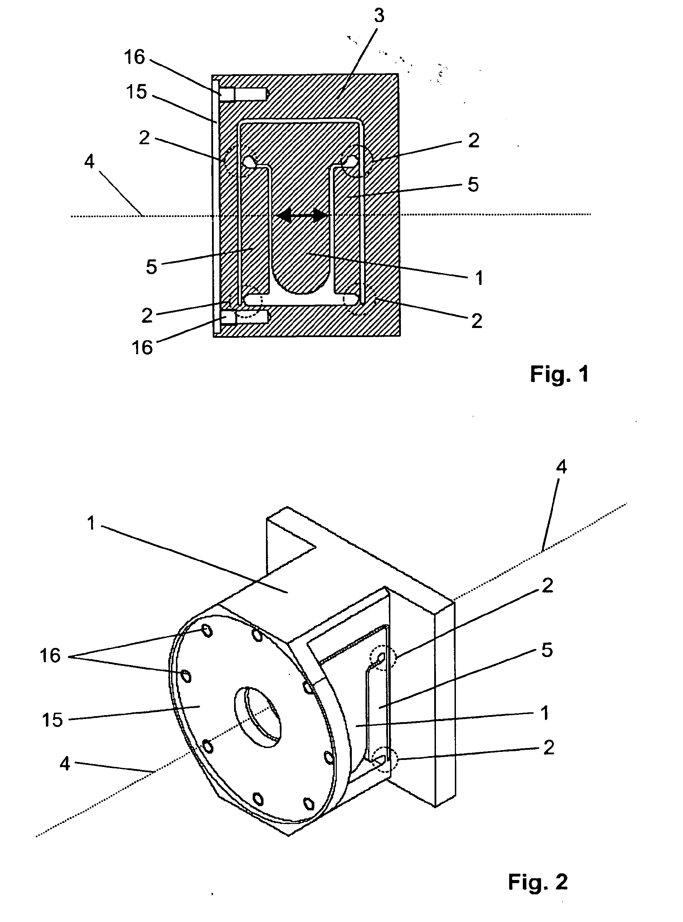

Die Fig. 1 und 2 zeigen das zur Halterung der (nicht dargestellten) Fokussierungslinse vorgesehene Element eines Faserkopplers gemäß der Erfindung. Die Fokussierungslinse ist an einem Linsenhalter 1 in einer vorjustierten Position festgelegt. Der Linsenhalter 1 ist über insgesamt vier elastische Festkörpergelenke 2 mit einem Grundkörper 3 verbunden. Der Linsenhalter 1 ist in axialer Richtung, nämlich parallel zur optischen Achse 4 linear verstellbar. Hierzu haben die Festkörpergelenke 2 quer zur optischen Achse 4 eine deutlich höhere Biegesteifigkeit als parallel dazu. Um eine im Wesentlichen rein lineare Bewegung der Fokussierungslinse zu ermöglichen, ist der Linsenhalter 1 über die vier Festkörpergelenke 2 und zwei Hebelarme 5 mit dem Grundkörper 3 verbunden. Dabei sind die beiden Hebelarme 5 nach Art eines Parallelogramms angeordnet. So ergibt sich eine lineare Verstellbarkeit der Fokussierungslinse, wie dies in der Fig. 1 durch den Doppelpfeil angedeutet ist. Die parallel zur optischen Achse 4 verlaufende Linearbewegung erfolgt bei dem dargestellten Ausführungsbeispiel ohne nennenswerte parasitäre Bogenbewegung, da die beiden Hebelarme 5 um ein vielfaches länger sind als der maximal mögliche Hub der Linearbewegung. Die nach Art eines Parallelogramms angeordneten Hebelarme 5 übersetzen eine beispielsweise mittels einer in den Fig. 1 und 2 nicht dargestellten Verstellschraube auf den Linsenhalter 1 einwirkende Kraft über die Festkörpergelenke 2 in die durch den Doppelpfeil dargestellte lineare Bewegung.

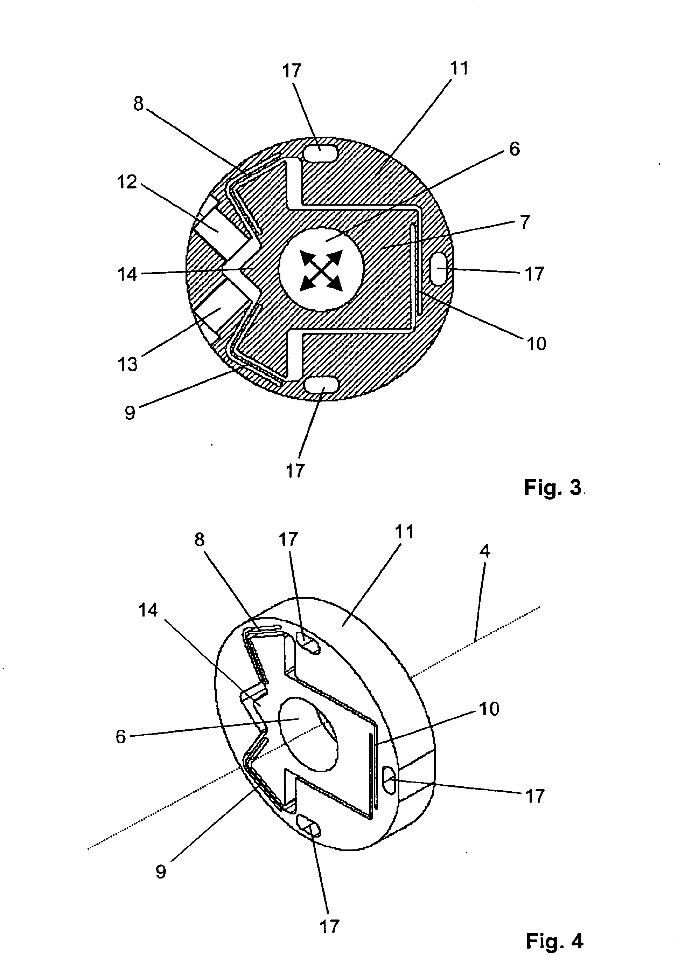

Die Fig.3 und 4 zeigen das zur Halterung und Verstellung der (nicht dargestellten) Faser vorgesehene Element des erfindungsgemäßen Faserkopplers. Die Faser wird in einer zentralen Aufnahmeöffnung 6 eines Faserhalters 7 festgelegt. Der Faserhalter 7 ist über insgesamt drei Festkörpergelenke 8, 9 und 10 mit einem scheibenförmigen Grundkörper 11 verbunden. Die Festkörpergelenke 8, 9 und 10 sind als Plattengelenke ausgebildet, die parallel zur optischen Achse 4 eine wesentlich höhere Biegesteifigkeit haben als senkrecht dazu. Durch die spezielle symmetrische Anordnung der Plattengelenke 8, 9 und 10, die in den Fig. 3 und 4 zu erkennen ist, ist die Faser relativ zu dem Grundkörper 11 in den durch die Doppelpfeile in der Fig. 3 angedeuteten zueinander orthogonalen Richtungen senkrecht zur optischen Achse 4 verstellbar. Hierzu sind in Gewindebohrungen 12 und 13 Verstellschrauben einschraubbar, deren Enden auf eine Verstellnase 14 des Faserhalters 7 einwirken. Aufgrund der Konstruktion des Faserhalters gemäß den Fig. 3 und 4 ist die Bewegung der Faser in den zur optischen Achse 4 senkrechten Richtungen entkoppelt und unabhängig von der Verstellung der Fokussierungslinse gemäß der Ausbildung des Linsenhalters, die in den Fig. 1 und 2 dargestellt ist.

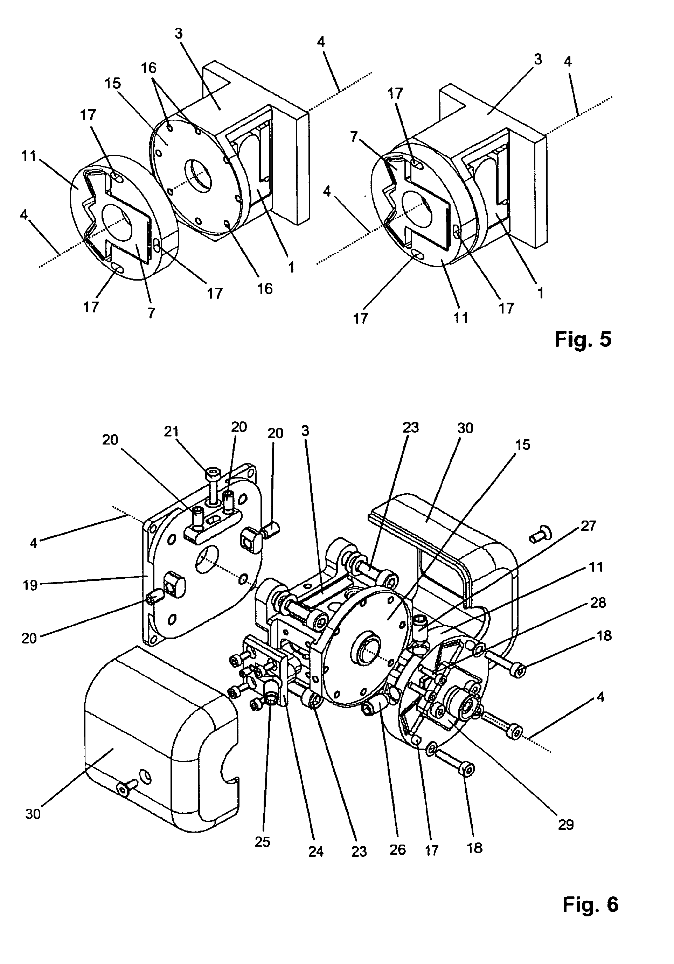

In der Fig. 5 ist zu erkennen, wie der Linsenhalter mit dem Faserhalter verbindbar ist. Das Grundelement 3 des Linsenhalters weist einen kreisförmigen Flansch 15 mit im Winkelabstand von 45° angeordneten Gewindebohrungen 16 auf. Dazu korrespondieren Langlöcher 17 an dem Grundelement 11 des Faserhalters. Mittels Schrauben kann der Grundkörper 11 des Faserhalters an dem Grundkörper 3 des Linsenhalters an dessen Flansch 15 festgeschraubt werden, und zwar unter verschiedenen diskreten Winkelpositionen in Bezug auf die optische Achse 4. Die Winkelposition kann dabei in 45°-Schritten gewählt werden, wobei die Langlöcher 17 eine Feinjustierung im Bereich von +/- 4° ermöglichen.

Die Fig. 6 zeigt den erfindungsgemäßen Faserkoppler in einer Explosionsdarstellung. Der Grundkörper 3 des Linsenhalters ist über den Flansch 15 mit dem Grundkörper 11 des Faserhalters verschraubt, und zwar mittels Schrauben 18. Die Gesamtanordnung aus Faserhalter und Linsenhalter ist an einem Rückwandelement 19 festlegbar, dabei dienen Zentrierschrauben 20 zur horizontalen bzw. vertikalen Zentrierung. Über eine Schraube 21, die in eine Gewindebohrung 22 eingreift, kann zusätzlich Zug auf die Einheit aus Linsenhalter und Faserhalter ausgeübt werden. Zur Fixierung an dem Rückwandelement 19 dienen Fixierungsschrauben 23. Weiterhin ist ein Fokusschraubenblock 24 vorgesehen, der mit dem Grundkörper 3 verschraubbar ist. Eine Fokus-Verstellschraube 25 wirkt auf den Linsenhalter zu dessen axialer Verstellung ein. Zur transversalen Verstellung der Faser sind zwei Verstellschrauben 26 und 27 vorgesehen, die in zueinander senkrechten Richtungen auf den Faserhalter einwirken. Die Verstellschrauben 26 und 27 können mittels Konterschrauben 28 fixiert werden. Zur Festlegung der Faser an dem Faserhalter dient ein Faseraufnehmer 29. Zwei Gehäusehalbschalen 30 dienen als Seitenwandung, sodass die gesamte Anordnung zum Zwecke der thermischen Isolierung durch die Schalen 30 zusammen mit dem Rückwandelement 19 allseitig umschlossen ist.

## Patentansprüche

1. Faserkoppler zur Einkopplung von Licht in eine optische Faser und/oder zur Auskopplung von Licht aus der Faser, mit zwei Halteelementen, nämlich einem Faserhalter (7) zur Halterung der Faser, und einem Linsenhalter (1) zur Halterung einer Fokussierungslinse, wobei eines der Halteelemente in axialer und das andere in transversaler Richtung verstellbar ist und wobei die Halteelemente (1, 7) jeweils über wenigstens ein elastisches Festkörpergelenk (2, 8, 9, 10) mit einem Grundkörper (3, 11) verbunden sind,
**dadurch gekennzeichnet, dass** das erste Halteelement (1) über insgesamt vier Festkörpergelenke (2) und zwei Hebelarme (5) mit dem Grundkörper (3) verbunden ist, wobei die beiden Hebelarme (5) nach Art eines Parallelogramms angeordnet sind und das erste Halteelement (1) in Richtung der Optischen Achse (4) zwischen den beiden Hebelarmen (5) angeordnet ist, sodass das erste Halteelement (1) im Wesentlichen parallel zur optischen Achse (4) linear verstellbar ist.

2. Faserkoppler nach Anspruch 1, **dadurch gekennzeichnet, dass** das Festkörpergelenk (2) eines Halteelementes (1) quer zur optischen Achse (4) eine höhere Biegesteifigkeit hat als parallel dazu.

3. Faserkoppler nach Anspruch 2, **dadurch gekennzeichnet, dass** das Festkörpergelenk (8, 9, 10) des anderen Halteelementes (7) parallel zur optischen Achse (4) eine höhere Biegesteifigkeit hat als senkrecht dazu.

4. Faserkoppler nach einem der Ansprüche 1 bis 3, **dadurch gekennzeichnet, dass** eines der Halteelemente (7) über wenigstens zwei Festkörpergelenke (8, 9) mit dem Grundkörper (11) verbunden ist, und zwar derart, dass das Halteelement (7) in zwei Richtungen senkrecht zur optischen Achse (4) verstellbar ist.

5. Faserkoppler nach Anspruch 4, **dadurch gekennzeichnet, dass** die Festkörpergelenke (8, 9, 10) Plattengelenke sind.

6. Faserkoppler nach einem der Ansprüche 1 bis 5, **dadurch gekennzeichnet, dass** an wenigstens einem der Halteelemente (1, 7) eine Verstellschraube zur Festlegung der Position des Halteelementes (1, 7) relativ zu dem Grundkörper (3, 11) angreift.

7. Faserkoppler nach einem der Ansprüche 1 bis 6, **dadurch gekennzeichnet, dass** der Grundkörper (11) des Faserhalters (7) unter verschiedenen diskreten Winkelpositionen in Bezug auf die optische Achse (4) an dem Grundkörper (3) des Linsenhalters (1) festlegbar ist.

8. Faserkoppler nach einem der Ansprüche 1 bis 7, **gekennzeichnet durch** ein die Halteelemente (1, 7) und die zugehörigen Grundkörper (3, 11) allseitig umschließendes Gehäuse (19, 30).

## Claims

1. A fibre coupler for coupling light into an optical fibre and/or for coupling light out of the fibre, comprising two holding elements, namely a fibre holder (7) for holding the fibre and a lens holder (1) for holding a focusing lens, wherein one of the holding elements is displaceable in an axial direction and the other is displaceable in a transverse direction and wherein the holding elements (1, 7) are each connected to a respective main body (3,11) by way of at least one elastic solid-body joint (2, 8, 9, 10),
**characterised in that** the first holding element (1) is connected to the main body (3) by way of a total of four solid-body joints (2) and two lever arms (5), wherein the two lever arms (5) are arranged in the manner of a parallelogram, and the first holding element (1) is arranged between the two lever arms (5) in the direction of the optical axis (4) so that the first holding element (1) is linearly displaceable substantially parallel to the optical axis (4).

2. A fibre coupler according to claim 1 **characterised in that** the solid-body joint (2) of a holding element (1) is of higher flexural stiffness in transverse relationship with the optical axis (4) than in parallel relationship therewith.

3. A fibre coupler according to claim 2 **characterised in that** the solid-body joint (8, 9, 10) of the other holding element (7) is of higher flexural stiffness in parallel relationship with the optical axis (4) than in perpendicular relationship therewith.

4. A fibre coupler according to one of claims 1 to 3 **characterised in that** one of the holding elements (7) is connected to the main body (11) by way of at least two solid-body joints (8, 9), more specifically in such a way that the holding element (7) is displaceable in two directions perpendicularly to the optical axis (4).

5. A fibre coupler according to claim 4 **characterised in that** the solid-body joints (8, 9, 10) are plate joints.

6. A fibre coupler according to one of claims 1 to 5 **characterised in that** at least one of the holding elements (1, 7) is engaged by an adjusting screw for fixing the position of the holding element (1, 7) relative to the main body (3, 11).

7. A fibre coupler according to one of claims 1 to 6 **characterised in that** the main body (11) of the fibre holder (7) can be fixed to the main body (3) of the lens holder (1) at different discrete angular positions with respect to the optical axis (4).

8. A fibre coupler according to one of claims 1 to 7 **characterised by** a housing (19, 30) enclosing the holding elements (1,7) and the associated main bodies (3, 11) at all sides.

## Revendications

1. Coupleur à fibre optique pour injecter la lumière dans une fibre optique et/ou pour retirer la lumière de la fibre optique, avec deux éléments de retenue, à savoir un support de fibre (7) pour tenir la fibre, et un support de lentille (1) pour tenir une lentille de focalisation, où l'un des éléments de retenue est déplaçable dans la direction axiale et l'autre dans la direction transversale, et où des éléments de retenue (1, 7) sont reliés chacun par au moins une articulation de corps solide élastique (2, 8, 9, 10) à un corps de base (3, 11),
**caractérisé en ce que** le premier élément de retenue (1) est relié par au total quatre articulations de corps solde (2) et deux bras de levier (5) au corps de base (3), où les deux bras de levier (5) sont disposés à la manière d'un parallélogramme, et le premier élément de retenue (1) est disposé dans la direction de l'axe optique (4) entre les deux bras de levier (5), de .sorte que le premier élément de retenue (1) est ajustable linéairement sensiblement parallèlement à l'axe optique (4).

2. Coupleur à fibre optique selon la revendication 1, **caractérisé en ce que** l'articulation de corps solide (2) d'un élément de retenue (1) possède, transversalement à l'axe optique (4), une plus grande rigidité en flexion que parallèlement à celui-ci.

3. Coupleur à fibre optique selon la revendication 2, **caractérisé en ce que** l'articulation de corps solide (8, 9, 10) de l'autre élément de retenue (7) possède, parallèlement à l'axe optique (4), une plus grande rigidité en flexion que perpendiculairement à celui-ci.

4. Coupleur à fibre optique selon l'une des revendications 1 à 3, **caractérisé en ce que** l'un des éléments de retenue (7) est relié par au moins deux articulations de corps solide (8, 9) au corps de base (11), à savoir de telle sorte que l'élément de retenue (7) est ajustable dans deux directions perpendiculairement à l'axe optique (4).

5. Coupleur à fibre optique selon la revendication 4, **caractérisé en ce que** les articulations de corps solide (8, 9, 10) sont des articulations à plaques.

6. Coupleur à fibre optique selon l'une des revendication 1 à 5, **caractérisé en ce que** s'applique à au moins l'un des éléments de retenue (1, 7) une vis d'ajustage pour fixer la position de l'élément de retenue (1, 7) relativement au corps de base (3, 11).

7. Coupleur à fibre optique selon l'une des revendications 1 à 6, **caractérisé en ce que** le corps de base (11) du support de fibre (7) peut être fixé selon différentes positions angulaires discrètes par rapport à l'axe optique (4) au corps de base (3) du support de lentille (1).

8. Coupleur à fibre optique selon l'une des revendications .1 à 7, **caractérisé par** un boîtier (19, 30) entourant dé tous côtés les éléments de retenue (1, 7) et les corps de base associés (3, 11).
